Europäisches Patentamt

European Patent Office

Office européen des brevets

(19)

(11) Publication number: **0 163 517**
**B1**

(12) EUROPEAN PATENT SPECIFICATION

(45) Date of publication of patent specification: **04.05.88**

(51) Int. Cl.⁴: **F 16 D 3/84**

(21) Application number: **85303746.3**

(22) Date of filing: **29.05.85**

(54) Fiber-reinforced dust boot for a mechanical joint.

(30) Priority: **29.05.84 JP 109237/84**

(43) Date of publication of application:
**04.12.85 Bulletin 85/49**

(45) Publication of the grant of the patent:
**04.05.88 Bulletin 88/18**

(84) Designated Contracting States:
**DE FR GB**

(56) References cited:
EP-A-0 061 320
DE-A-2 904 521
FR-A-1 160 498
FR-A-2 308 019
US-A-1 922 431
US-A-2 755 643
US-A-2 857 189

H. Saechtling: "Kunststoff-Taschenbuch", 20th
edition, Carl Hanser Verlag München-Wien,
1977, page 318.

(73) Proprietor: **HONDA GIKEN KOGYO KABUSHIKI KAISHA**
**27-8, Jingumae, 6-chome**
**Shibuya-ku, Tokyo 150 (JP)**

(72) Inventor: **Yoshida, Hiroshi**
**2-5-28, Horinouchi**
**Niiza-shi Saitama (JP)**
Inventor: **Kato, Rentaro**
**9-2-102, Mizohata-cho**
**Sakado-shi Saitama (JP)**
Inventor: **Takanaka, Akira**
**1-2-4, Kamiitabashi**
**Itabashiku Tokyo (JP)**
Inventor: **Ito, Shuji**
**2-22-2, Tohoku**
**Niiza-shi Saitama (JP)**
Inventor: **Yamamoto, Naotaka**
**3-12-13-307, Sensui**
**Asaka-shi Saitama (JP)**
Inventor: **Inoue, Masanobu**
**4-21-10, Fuchinobe**
**Sagamihara-shi Kanagawa (JP)**

Courier Press, Leamington Spa, England.

**0 163 517**

(74) Representative: **MacFarlane, John Anthony Christopher et al**
**HASELTINE LAKE & CO. Hazlitt House 28, Southampton Buildings Chancery Lane London WC2A 1AT (GB)**

## Description

The present invention relates to an improvement in a dust boot for a mechanical joint such as a constant velocity joint in an automobile or other vehicle. The dust boot serves to protect the joint from dirt and other material from the atmosphere and the road surface. It also prevents the outflow of lubricating grease used in the joint and sealed inside the boot.

Carbon-filled rubber has conventionally been used for manufacturing dust boots. The incorporation of carbon in rubber increases the rigidity of the rubber. However, there is a limit in the extent to which the rigidity of the material used in a boot can be increased because high rigidity causes problems in molding. In addition, a dust boot covering a joint is prone to expand and soften as a result of degradation of the material over time due to absorption of the lubricating grease. Particularly, at high-speed rotation the external diameter of the boot tends to expand due to the centrifugal force acting on it. As a result, it has been necessary in the design of such boots to increase the thickness of the wall in the expanding portions of the boot, and to enlarge the clearance between the boot and the body or other parts of the vehicle.

EP—A—61 320 discloses a dust boot for a constant velocity joint of a vehicle. The boot is molded of a rubber material with a reinforcement of nylon polyester or aramid (see in particular page 2, line 22; page 4, line 2; page 6, lines 12—13 and page 7, line 14).

US—A—2 857 189 discloses a bushing of elastomer reinforced by glass fiber with a length of 6.35 mm and a diameter of 12 m (see in particular column 1, lines 29—48).

The book H. Saechtling "Kunststoff-Taschenbuch", 20th edition, Carl Hanser Verlag München-Wien 1977 discloses on page 318 glass fibers for reinforcement of elastomers in the range of 10 to 15% and with a length of up to 4 mm and with a diameter 10 μm.

According to the present invention there is provided a dust boot for a joint in a vehicle, the boot being molded of a rubber material having a reinforcement of fibers selected from the group consisting of synthetic inorganic fibers, synthetic organic fibers, and naturally occurring fibers; characterized in that the fibers consist of short fiber segments having a length of 2—6 mm and comprising 2—10% by weight of the rubber material. By utilizing short fibers having a length of 2—6 mm and comprising 2—10% by weight of the rubber material, there can be provided a boot for a joint which can be made very rigid and which has a reduced expansion under high speed rotation and is more resistant to impregnation by lubricating grease than the boots disclosed in the prior art mentioned above. Also there can be secured a design advantage by reducing the clearance needed between the boot and adjacent parts of the vehicle, and the boot can be advantageously lightweight.

The diameter of the fibers is preferably 30—50 μm.

Fig. 1 is a perspective view of an automobile showing drive shafts provided with dust boots;

Fig. 2 is an exploded perspective view of a drive shaft equipped with a boot for a constant velocity joint; and

Fig. 3 is a cross-sectional side elevational view of a boot for a constant velocity joint.

The present boot is molded of rubber material which has been reinforced with short fibers. The rubber material which can be used is not particularly limited. Any synthetic and/or natural rubber may be used.

The fibers suitable for incorporating into the rubber material are synthetic inorganic fibers such as carbon fibers; synthetic organic fibers such as polyester, nylon, or vinylon; and natural fibers such as jute. The fibers may be incorporated into the rubber material by any method provided that the fibers are uniformly distributed therein.

The boot may be molded by any known conventional molding method, in particular a method using a metal mold.

The shape of the boot varies depending on the type of joint it protects. For example, the boot may be a straight type or bellows type propeller shaft dust boot, a tie rod end boot (for a rack and pinion steering wheel), or a ball joint boot.

A straight type boot made as herein described does not soften upon prolonged contact with lubricating grease, does not become deformed as a result of rotation, and does not expand under high speed rotation. Its durability is also improved because it has a high resistance to abrasion.

In addition to having the same advantages as described for a straight type boot, a bellows type boot made as herein described also saves space in that less clearance is required between the boot and adjacent parts of a vehicle.

A tie rod end boot made as herein described is not subject to problems such as drooping because it is highly rigid. It also presents a design advantage in that less clearance is required.

A ball joint boot made as herein described can be subject to a large angle of torsion without causing the sealing lip of the boot to become separated from the surface of the joint. In addition, this boot is not subject to abrasion due to vertical rocking of the joint.

. The boot is not limited to the embodiments specifically described.

A preferred embodiment is a boot for a constant velocity joint. An example of a boot for a constant velocity joint is described below with reference to the drawings.

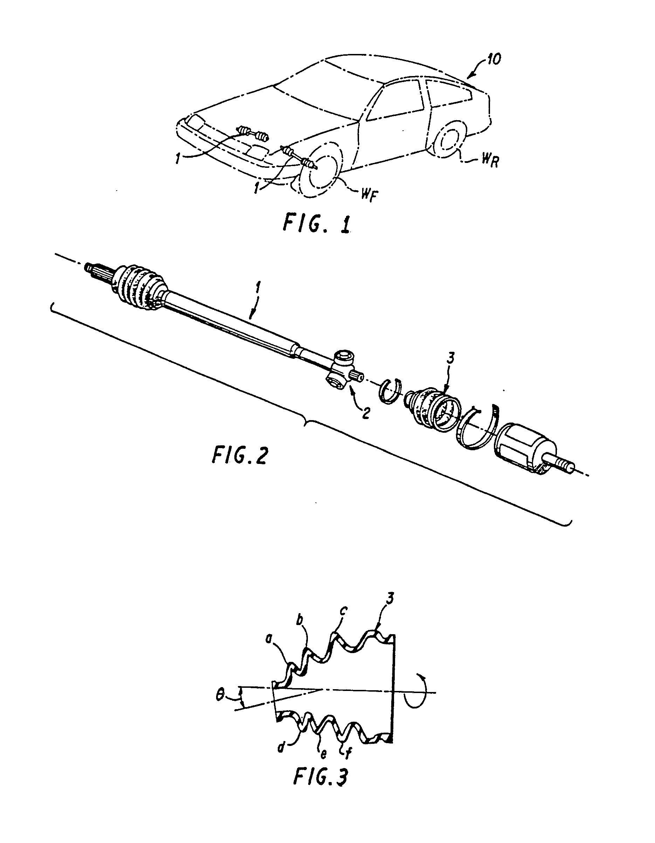

Referring to Figs. 1 and 2, an automobile 10 of the front wheel drive type is provided with drive shafts 1,1 for driving the front wheels (WF) of the automobile. A constant-velocity joint 2 is provided in the drive

**0 163 517**

shaft 1. The constant-velocity joint 2 is covered with a boot 3 integrally formed in a bellows shape from a rubber material containing 2 to 10 wt.% of short fibers.

The superior properties of the boot made as herein described are demonstrated by the following comparisons. A boot for a constant velocity joint was made of a rubber material A as herein described and was compared to a similar boot made of a conventional material B. Table 1 shows the properties of these two boots.

In Table 1, the volume change (%) is the volume change of the boot material after it has been immersed in lubricating grease at 100°C for 70 hours. This volume change is a measure of the resistance of the boot to impregnation by the grease.

TABLE 1

| | New material A (Polymer: CR-type short fibers) | | | Conventional material B (CR-type polymer) |
|---|---|---|---|---|
| | (I) 2 wt.% | (II) 5 wt.% | (III) 10 wt.% | |
| Physical properties of material: Viscosity $ML_{1+4}$ (100°C) | 39 | 38 | 41 | 40 |
| Hardness Hs (°C) | 62 | 66 | 70 | 60 |
| Tensile strength (kg/cm$^2$) | 170 | 165 | 150 | 180 |
| Breaking extension (%) | 360 | 340 | 300 | 370 |
| Volume change (%) | 9.6 | 8.0 | 6.5 | 12 |
| 100% modulus (kg/cm$^2$) | 30 | 34 | 36 | 28 |
| 50% modulus | 16 | 19 | 24 | 12 |
| Workability at the time of mold release | Favorable | Favorable | Slightly difficult | Favorable |

Note:

Short fibers are jute provided with adhesion treatment in which the fiber surface of jute is covered with isocyanate type adhesive.

"CR" is chloroprene rubber

Breaking extension: Elongation based on a test method of cured rubber JIS K 6301 (Japanese Industrial Standard)

Table 1 shows that the 50% modulus, which is an indicator of rigidity in the region of practical application, increases appreciably in the material which contains a small amount (2 wt.%) of short fibers. At the same time, the viscosity, which is regarded as an indicator of relative ease in moldability, does not increase. Therefore, it is possible to make the boot 3 rigid without impairing its moldability.

Rigidity is enhanced further if the proportion of short fibers is increased. If this proportion exceeds 10 wt.%, however, it becomes difficult to release the boot from a metal mold. Consequently, 10 wt.% is an upper limit in practical application.

If the proportion of short fibers is lower than 2 wt.%, rigidity is not much improved in comparison to a boot in which no short fibers are incorporated. Therefore, any proportion of fibers below 2 wt.% is not suitable.

Furthermore, it is necessary that the fiber segments have a length of no less than 2 mm and no more than 6 mm in order for the dust boot to have a proper rigidity and a proper moldability. It is also preferable that the diameter of the fiber be in the range 30—50 µm.

If the diameter exceeds 50 µm, the fiber reinforced rubber (FRR) shows poor fatigue strength because the short fibers cannot be uniformly dispersed.

4

If the diameter is less than 30 µm, the fiber reinforcing effect is poor because it is easy for the fiber to cut at the molding.

Table 2 shows the volume expansion at points a, b, c, d, e and f of the boot of the shape shown in Fig. 3 for a boot made of material A as described herein, and for a boot made of a conventional material B. This volume expansion is measured with the boot 3 inclined by θ°, as shown in Fig. 3, that is, by 5° according to the embodiment, in an atmosphere at 70°C and with an engine speed of 1,700 r.p.m.

TABLE 2

| Material　　　　Measuring point | Expansion (mm) | | | | | |
|---|---|---|---|---|---|---|
| | a | b | c | d | e | f |
| New Material A　(I) 2 wt.% | 0.8 | 0.8 | 1.5 | 1.5 | 1.5 | 1.5 |
| (II) 5 wt.% | 0.5 | 0.5 | 1.0 | 1.0 | 1.0 | 1.0 |
| (III) 10 wt.% | 0.5 | 0.4 | 0.8 | 0.8 | 0.8 | 0.8 |
| Conventional material B | 5.0 | 15.0 | 14.0 | 9.0 | 16.5 | 13.0 |

The materials I, II and III in Table 2 contain short natural jute fibers in proportions of 2 wt.%, 5 wt.% and 10 wt.%, respectively.

The resistance of the new material A to impregnation by lubricating grease is high, and as a result, its expansion due to grease absorption is low, as evident from Table 2. Therefore, it is possible to reduce the clearance between the boot and adjacent parts of the vehicle. This is advantageous in the design of space layout in the vicinity of the boot.

Furthermore, since the material A is highly resistant to impregnation by lubricating grease, it is possible to reduce the thickness of the wall of the boot. As a result, the weight of the boot is advantageously reduced.

In summary, by molding a boot from a rubber material containing 2—10 wt.% short fiber segments, it is possible to make a lightweight boot, to check its expansion and thereby gain a design advantage in that less clearance is needed between the boot and adjacent parts of a vehicle.

**Claims**

1. A dust boot (3) for a joint in a vehicle, the boot (3) being molded of a rubber material having a reinforcement of fibers selected from the group consisting of synthetic inorganic fibers, synthetic organic fibers, and naturally occurring fibers; characterised in that the fibers consist of short fiber segments having a length of 2—6 mm and comprising 2—10% by weight of the rubber material.

2. A dust boot (3) as claimed in claim 1, wherein the fiber has a diameter of 30—50 µm.

3. A dust boot (3) as claimed in claim 1 or 2, wherein the boot (3) is a bellows-shaped boot (3) for a constant velocity joint (2).

**Patentansprüche**

1. Staubschutz-Manschette (3) für eine Verbindungsstelle in einem Fahrzeug, welche Manschette (3) aus einem Gummimaterial geformt ist, das eine Bewehrung aus Fasern hat, die aus einer Gruppe ausgewählt sind, welche aus synthetischen anorganischen Fasern, synthetischen organischen Fasern und natürlich vorkommenden Fasern besteht, dadurch gekennzeichnet, daß die Fasern aus kurzen Fasersegmenten bestehen, die eine Länge von 2—6 mm haben und 2—10% des Gewichts des Gummimaterials ausmachen.

2. Staubschutz-Manschette (3) nach Anspruch 1, bei der die Faser einen Durchmesser von 30—50 µm hat.

3. Staubschutz-Manschette (3) nach Anspruch 1 oder 2, wobei die Manschette (3) eine faltenbalgförmige Manschette (3) für eine Konstantdrehzahl-Verbindung (2) ist.

**Revendications**

1. Machon d'étanchéité (3) pour joint universel d'un véhicule, le manchon (3) étant réalisé par moulage d'un matériau caoutchouteux renforcé par des fibres sélectionnées dans le groupe consitué par des fibres inorganiques synthétiques, des fibres organiques synthétiques, et des fibres naturelles; caractérisé en ce que les fibres sont constituées de segments de fibres courts d'une longueur de 2—6 mm et comprenant 2—10% en poids du matériau caoutchouteux.

2. Manchon d'étanchéité (3) selon la revendication 1, caractérisé en ce que la fibre a un diamètre de 30—50 µm.

3. Manchon d'étanchéité (3) selon la revendication 1 ou 2, caractérisé en ce que le manchon (3) est un manchon en forme de soufflet (3) pour joint à vitesse constante (2).

0 163 517

FIG. 1

FIG.2

FIG.3